# EUROPEAN PATENT SPECIFICATION

(11) **EP 1 838 058 B1**
(45) Date of publication and mention of the grant of the patent: **10.12.2008**
(21) Application number: 06017694.8
(22) Date of filing: 25.08.2006
(51) Int. Cl.: H04L 12/58

(54) **Method, device and system for mobile information services**
Verfahren, Vorrichtung und System für mobile Informationsdienste
Procédé, dispositif et système pour des services d'information mobiles

(30) Priority: 20.03.2006 CN 200610065539
(43) Date of publication of application: 26.09.2007
(73) Proprietor: ACER INCORPORATED, Taipei Hsien 221 (TW)
(72) Inventor: Lee, Ming-Hsien, Hsichih Taipei Hsien (TW); Lin, Yung-Sen, Hsichih Taipei Hsien (TW); Chen, Tse-Min, Hsichih Taipei Hsien (TW)
(74) Representative: Kahlhöfer, Hermann

(56) References cited:
- WO-A-99/06915
- US-A1- 2003 126 216
- US-A1- 2004 088 358

## Description

The invention relates to mobile information services, more particularly to a method of mobile information services adapted to provide messages related to specific information to a hand-held mobile communications device.

In this era when developments of Internet and wireless communications technologies flourish, use of a handset to send and receive e-mail has become one of the channels to obtain latest information. In order to facilitate reception of e-mail, more and more telecommunications service providers provide push mail services, and push mail has recently become a popular subject for discussion.

The document US 2003/0126216 describes a system for delivering e-mail to a location that is remote from the user's desktop or e-mail server. The user is enabled to reply to e-mails from the remote location. The document US 2004/0088358 describes a system for notification of a user of a mobile communication device. The user will be notified by the system, when a communication meets preset notification criteria.

With the so-called push mail, after the user has set relevant rules or conditions, such as subjects of the mail to be received, or senders of the mail to be received, in a mail server, when contents of an e-mail message received by the mail server comply with the preset rules, the mail server will automatically send a backup copy of the mail to a device of the user, such as a handset or a personal computer. Therefore, the user can receive the latest e-mail without having to go through such troublesome procedures as accessing the Internet, inputting his/her account number and user password, etc.

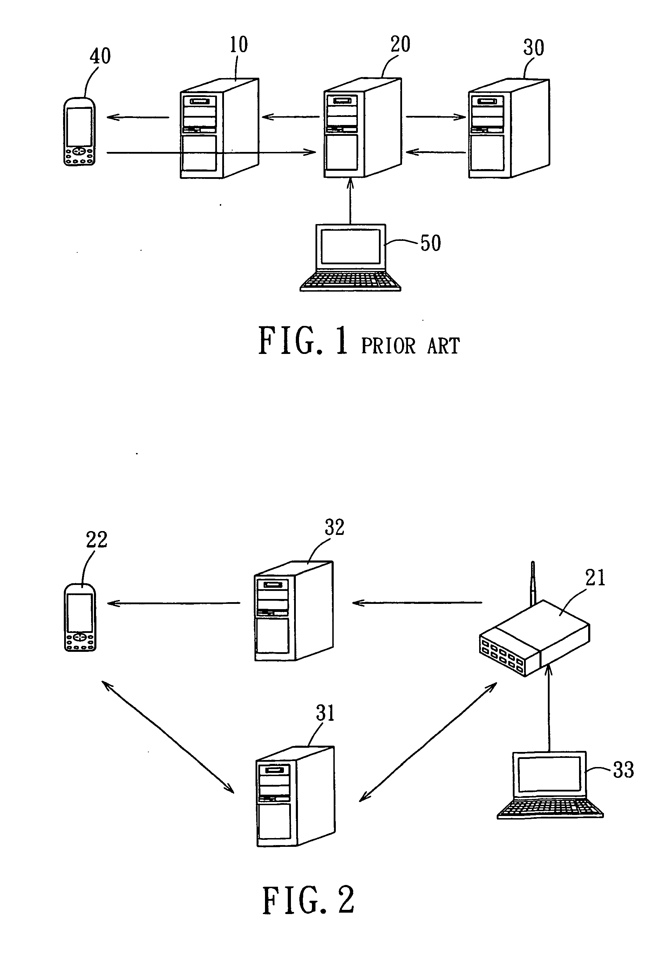

Figure 1 depicts a push mail service system developed by a Canadian company named Research In Motion (RIM) using the push mail technology. The system provides a push mail server 20 connected to a telecommunications service provider 10 having a cooperative relation with said company, and various mail servers 30 (only one is exemplified). When a user subscribes to a push mail service from the telecommunications service provider 10, and the user has his/her handset 40 loaded with relevant software for the push mail server 20 or the user uses an electronic device supplied by RIM, the user can link up with the push mail server 20 through a personal computer 50 to set parameters of the mail to be received by the handset 40, such as subjects of the mail, senders of the mail, etc. Thereafter, the push mail server 20 will check and screen the e-mail on the mail servers 30 according to the rules preset by the user regularly, convert those e-mail messages that comply with the user's preset rules to a specific format suitable for reception by the user's handset 40, and transmit the same to the user's handset 40 through the telecommunications service provider 10.

However, there exist the following problems with the aforesaid push mail service system:
1. The push mail service provider has to invest manpower and time resources to maintain the push mail server 20;
2. Subscribing to the push mail service involves payment of an extra fee to the provider of the push mail server 20; and
3. Since the e-mail for the user is received and screened by the push mail server 20, and is converted to a suitable format by the push mail server 20 before being sent to the user's handset 40, security issues may arise.

Therefore, how to provide push mail functionality while avoiding the aforesaid problems is a subject to be investigated in the present invention.

Co-pending commonly assigned U.S. Patent Application Serial No. 11/432,088, entitled "Method for Acquiring Information, and Hand-held Mobile Communications Device for Implementing the Method," and filed on May 11, 2006, a continuation-in-part of which was published as US 2008/0014910 A1 discloses a method for acquiring information is implemented in a hand-held mobile communications device to access information in a remote information server through the Internet. The method includes enabling the communications device to acquire information from the information server at predetermined times, to filter the acquired information according to a filtering rule, and to display information complying with the filtering rule or a notification message relating to the information complying with the filtering rule according to a user setting. The method and device permits user convenience and ensures information confidentiality, without incurring extra fees.

Therefore, the object of the present invention is to provide a method of mobile information services which can overcome the drawbacks associated with the prior art, and a device and system for implementing the method. According to one aspect of the present invention, the method of mobile information services comprises: providing a mobile information service device at a user end for connecting to a remote information server and a telecommunications service provider so as to timely provide information to a hand-held mobile communications device; enabling the mobile information service device to search the information server according to a filtering rule for information complying with the filtering rule, and to send a notification message to the hand-held mobile communications device through the telecommunications service provider; and enabling the hand-held mobile communications device to download information related to the notification message from the information server after receiving the notification message.

According to another aspect of the present invention, the mobile information service device for implementing the aforesaid method is provided at a user end and adapted to connect to a remote information server and a telecommunications service provider so as to timely provide information to a hand-held mobile communications device. The mobile information service device includes a communications unit and a processing unit. The communications unit is adapted to be connected to the information server and the telecommunications service provider. The processing unit, according to a filtering rule and through the communications unit, searches the information server for information complying with the filtering rule, and generates a notification message to be sent to the hand-held mobile communications device through the communications unit that is connected to the telecommunications service provider.

According to a further aspect of the present invention, the mobile information service system for implementing the aforesaid method is adapted to be connected to an information server and a telecommunications service provider so as to timely obtain information provided by the information server. The mobile information service system includes a hand-held mobile communications device and a mobile information service device. The hand-held mobile communications device can be connected to the information server and the telecommunications service provider. The mobile information service device provided at a user end is connected to the information server and the telecommunications service provider, and, according to a filtering rule, searches the information server for information complying with the filtering rule, and subsequently sends a notification message through the telecommunications service provider to the hand-held mobile communications device such that the hand-held mobile communications device can, according to the notification message, download information related to the notification message from the information server.

Other features and advantages of the present invention will become apparent in the following detailed description of the preferred embodiment with reference to the accompanying drawings, of which:
Figure 1 is a schematic diagram of a conventional push mail service system;
Figure 2 is a schematic diagram of a system to implement a preferred embodiment of a method of mobile information services according to the present invention;
Figure 3 is a block diagram to illustrate the internal hardware architecture of the preferred embodiment of a mobile information service device according to the present invention;
Figure 4 is a flowchart to illustrate a search for information conducted using the preferred embodiment of the mobile information service device;
Figure 5 is a schematic diagram of a screen showing location of the mobile information service device through a personal computer;
Figure 6 is a schematic diagram of a screen displaying user information on the preferred embodiment of the mobile information service device;
Figure 7 is a schematic diagram of a screen for adding a user on the preferred embodiment of the mobile information service device;
Figure 8 is a flowchart of locating the mobile information service device when the preferred embodiment of the mobile information service device is used for the first time;
Figure 9 is a schematic diagram of a screen for setting a mail account when the preferred embodiment of the mobile information service device is used for the first time;
Figure 10 is a schematic diagram of a screen for setting a mail filter when the preferred embodiment of the mobile information service device is used for the first time;
Figure 11 is another schematic diagram of a screen for setting the mail filter when the preferred embodiment of the mobile information service device is used for the first time;
Figure 12 is a flowchart to illustrate the mobile information service in the preferred embodiment of the mobile information service device;
Figure 13 is a schematic diagram of a screen for opening a setup menu on the preferred embodiment of the mobile information service device;
Figure 14 is a schematic diagram of a screen for setting mobile mail scheduling on the preferred embodiment of the mobile information service device;
Figure 15 is a flowchart of a mail filter setup using the preferred embodiment of the mobile information service device;
Figure 16 is a flowchart of subsequently locating the preferred embodiment of the mobile information service device through the personal computer; and
Figure 17 is a schematic diagram to illustrate a screen for subsequent mail management setup on the mobile information service device through the personal computer.

Referring to Figure 2, a preferred embodiment of a mobile information service device 21 according to the present invention is adapted to be connected to various remote information servers 31 (only one is exemplified), and various telecommunications service providers 32 (only one is exemplified) so as to send particular messages to a hand-held mobile communications device 22 through the telecommunications service provider 32 such that the hand-held communications device 22 can selectively obtain information provided by the information server 31.

The information server 31 can be a mail server, such as the existing Exchange Mail Server, POP3/SMTP Mail Server, etc. The telecommunications service provider 32 can be AT&T, Sprint, Cingular, etc. The hand-held mobile communications device 22 must be a smart phone having a network accessing function, such as a GPRS (General Packet Radio Service) mobile phone or a Wi-Fi mobile phone, and an operating system capable of executing information downloading and reading functions, such as Win CE5.0.

The hand-held mobile communications device 22 can be sold with the mobile information service device 21 as a mobile information service system, or independently thereof. That is, to use the push mail services provided by the mobile information service device 21 the user only needs to purchase the mobile information service device 21, and to install in his/her own hand-held mobile communications device 22 a software program compatible with the mobile information service device 21.

In contrast to the conventional mobile mail server 20 which is provided at a remote end, the mobile information service device 21 of this embodiment is provided at the user end, e.g., the user's home or office.

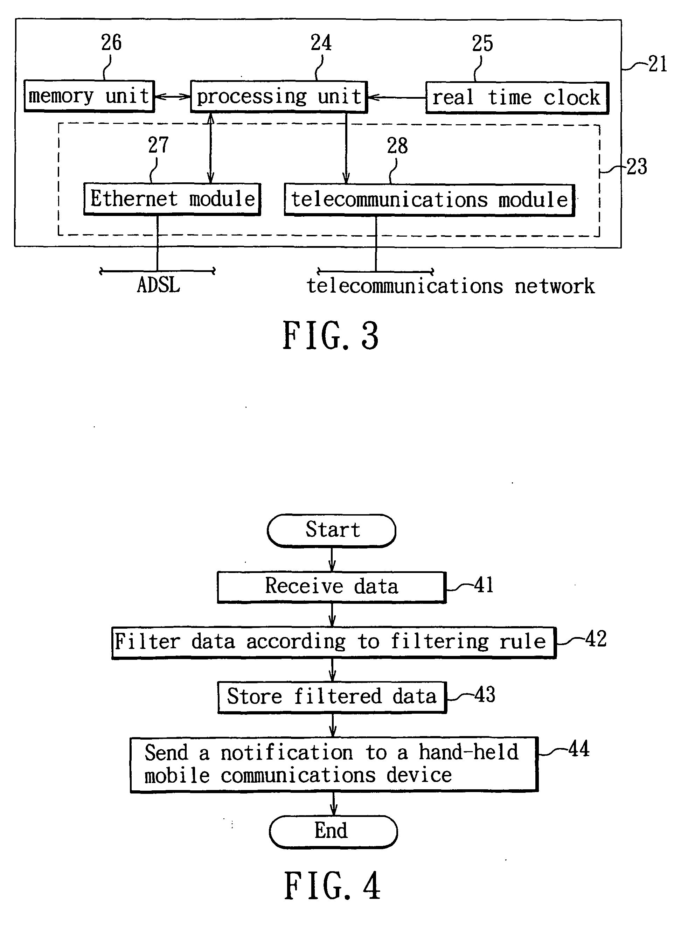

As shown in Figure 3, the mobile information service device 21 has a hardware architecture which includes a communications unit 23, a processing unit 24, a real time clock 25, and a memory unit 26.

The communications unit 23 includes an Ethernet module 27 and a telecommunications module 28. The Ethernet module 27 can be linked to the information server 31 through the Internet (using, e.g., an ADSL modem). The telecommunications module 28 (e.g., a GSM module) is used to connect to a telecommunications network so as to communicate with the telecommunications service provider 32.

The processing unit 24 can search the information server 31 for information of interest to the user and notify the user of the same according to rules preset by the user.

The real time clock 25 can trigger the processing unit 24 at predetermined intervals according to the user's settings.

The underlying principle for the mobile information service device 21 is as follows:
Referring to Figure 4, in step 41, when the processing unit 24 is activated by the real time clock 25, the processing unit 24 retrieves data from the information server 31 through the Ethernet module 27 of the communications unit 23, e.g., to determine whether there is any e-mail for the user, and to acquire a portion of the data of the received e-mail, e.g., the sender, the subject, and some of the content of the e-mail. Then, in step 42, according to filtering rules preset by the user, data complying with the rules are screened from the acquired portion of the data. In step 43, the data complying with the rules are stored temporarily in the memory unit 26, and step 44 is executed, in which a message (e.g., an SMS message, an MMS message, an EMS message, or a WAP Push message, depending on the functionality of the hand-held mobile communications device 22) containing the data complying with the filtering rules is sent to the hand-held mobile communications device 22 of the user through the telecommunications module 28 of the communications unit 23 and the telecommunications service provider 32, so as to notify the hand-held mobile communications device 22 to retrieve the desired e-mail from the information server 31.

In addition, it is noted that the communications unit 23 of the mobile information service device 21 may dispense with the telecommunications module 28, and can, instead, utilize the Ethernet module 27 to connect to the information server 31 so as to obtain the data, and can connect to the telecommunications service provider 32 through the Internet so as to forward the notification message to the hand-held mobile communications device 22 through the telecommunications service provider 32.

In addition, the mobile information service device 21 of this embodiment can be integrated with an IP router (access point, AP), i.e., it is merely necessary to add a wireless access module (not shown) to the mobile information service device 21. This will not take up a connecting port of the IP router, and can achieve efficient utilization of space.

The method of use and the operational flow of the mobile information service device 21 and the hand-held mobile communications device 22 will now be described in detail in the succeeding paragraphs.

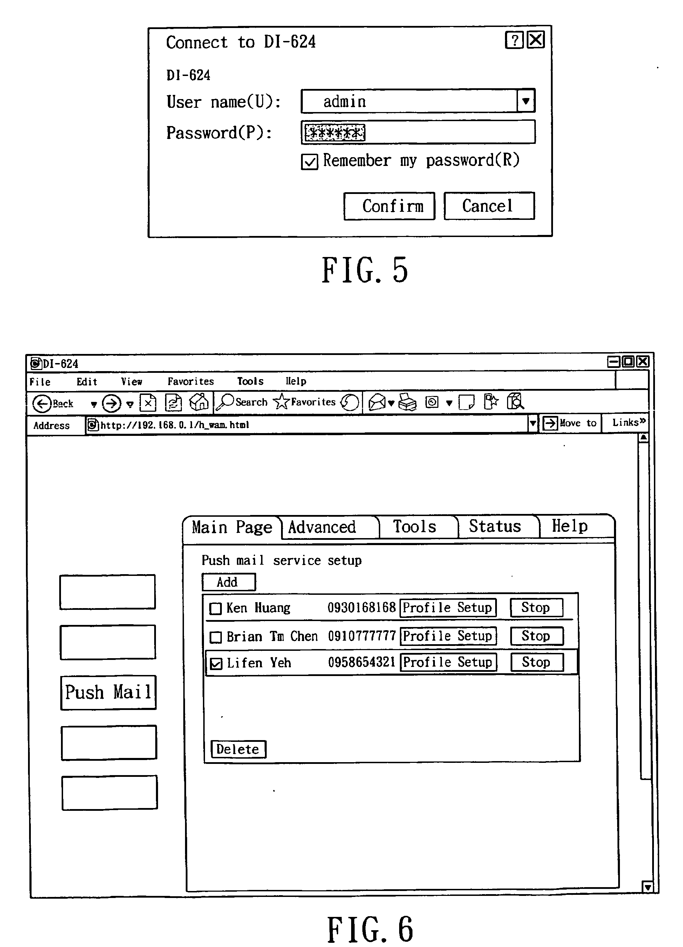

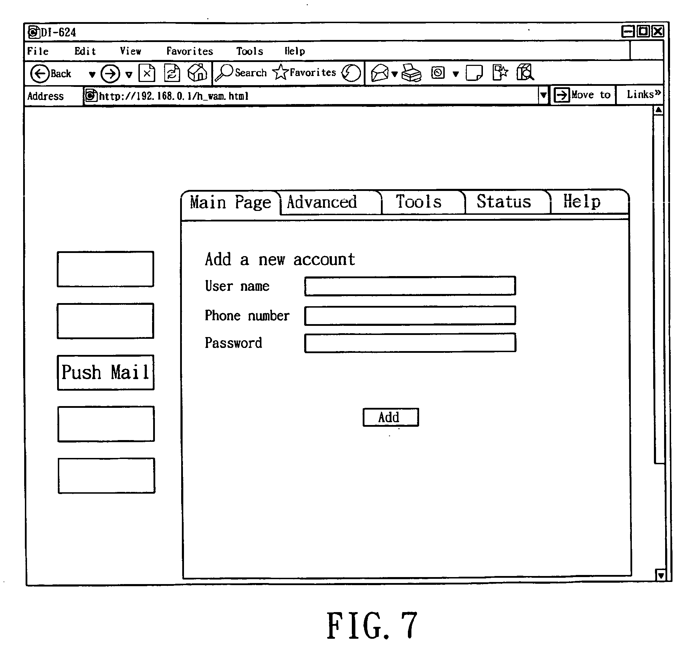

As shown in Figure 5, when a user wants to use the push mail service provided by the mobile information service device 21, supposing the mobile information service device 21 is provided in an office of a company, after the mobile information service device 21 is connected to a personal computer 33 (see Figure 2) of the company's management information system (MIS) (such as through a LAN port of the mobile information service device 21), the MIS personnel can locate the mobile information service device 21 by inputting an IP address or domain name of the mobile information service device 21 on the personal computer 33. After a successful connection, a web browser screen such as an Internet Explorer (IE) screen as shown in Figure 6 will appear on the personal computer 33, and a window will appear to show the user of the mobile information service device 21. Then, after the MIS personnel clicks an "ADD" button on the screen, an "Add a new account" screen as shown in Figure 7 will be displayed for the MIS personnel to fill in data of the user (such as name, mobile phone number, password, etc.). By clicking an "Add" button on the screen, a new user can be set in the mobile information service device 21 (i.e., the processing unit 24).

After the MIS personnel has set the new user in the mobile information service device 21, the mobile information service device 21 and the hand-held mobile communications device 22 have to undergo an initialization procedure on first use.

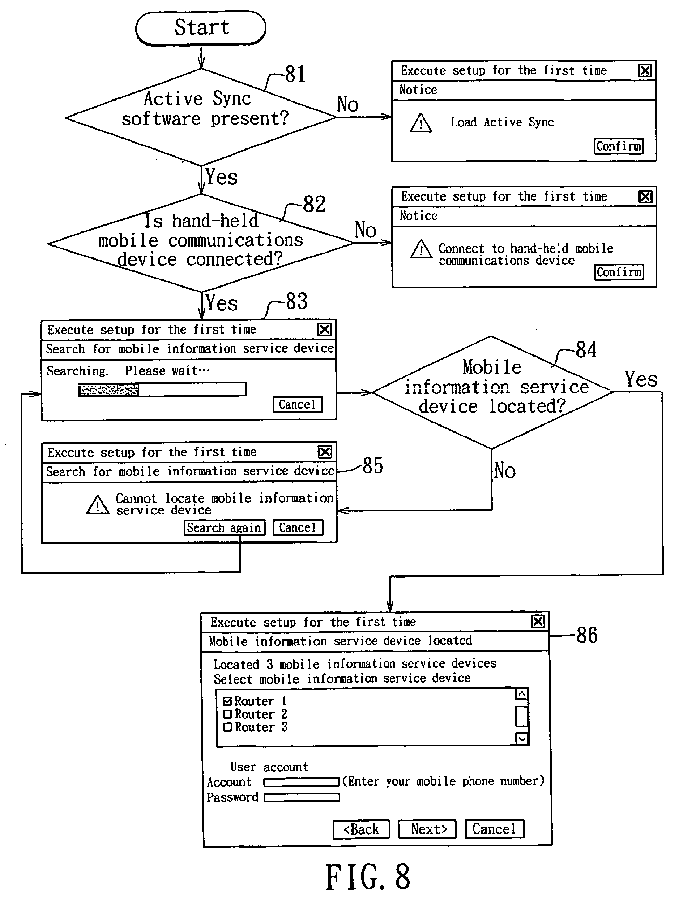

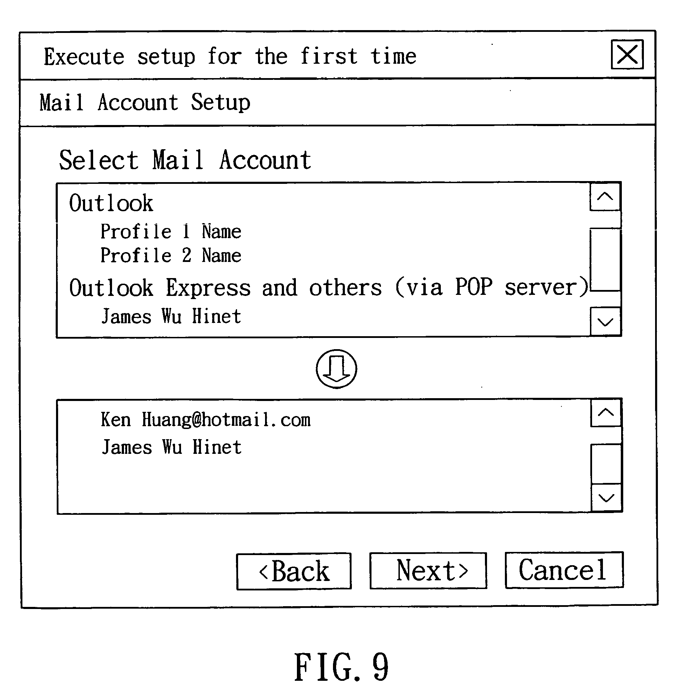

Therefore, in step 81 as shown in Figure 8, under the condition that the mobile information service device 21 and the personal computer 33 are connected, first, the personal computer 33 will inspect whether software (e.g., Active sync software) for enabling connection between the hand-held mobile communications device 22 and the personal computer 33 has been installed therein. If affirmative, the flow goes to step 82, where the personal computer 33 inspects whether the hand-held mobile communications device 22 has been connected to the personal computer 33. If yes, in steps 83-85 as shown in Figure 8, search procedures to search for the mobile information service device 21 (such as through area network broadcasting) is conducted. If the mobile information service device 21 is found, in step 86, a plurality of located mobile information service devices 21 are displayed on a screen of the personal computer 33, since a company may be using a plurality of mobile information service devices 21 (e.g., Router 1, Router 2, and Router 3) at the same time. The user of the hand-held mobile communications device 22 then selects the mobile information service device 21 (e.g., Router 1) used thereby, and inputs his/her account number and password. After clicking a "Next" button, a "Mail Account Setup" screen as shown in Figure 9 is displayed. In an upper text box of the screen, mail server account information (Profile 1 Name, Profile 2 Name, James Wu Hinet...) of an internal mail handler (e.g., Outlook or Outlook Express) is available for the user's selection and addition to a lower text box of the screen so as to select the mail server to be searched.

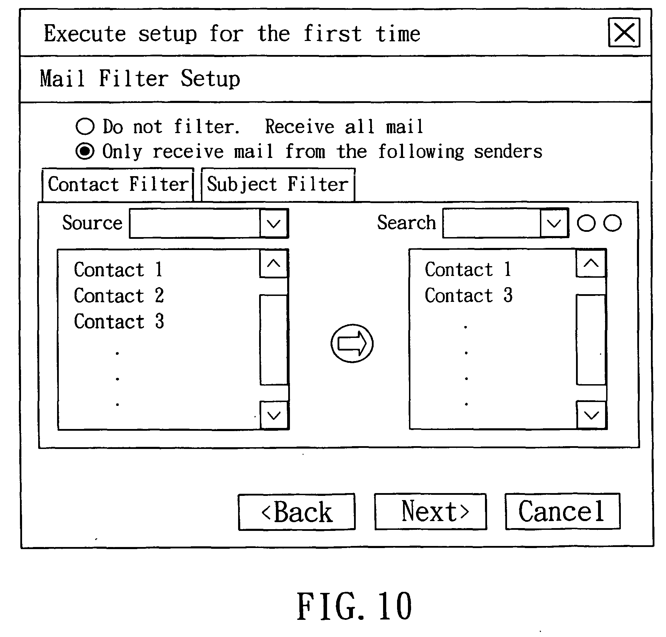

Subsequently, after the user has clicked the "Next" button, a screen entitled "Set Up Mail Filter" as shown in Figure 10 will appear to allow the user to set filtering rules. There are two options on an upper part of the screen: "Contact Filter" and "Subject Filter." When the "Contact Filter" is selected, two boxes will appear on the left and right sides of the screen, respectively. The box on the left displays data of a plurality of contacts (i.e., senders). The user can set the contacts (i.e., senders) from which mail is to be received by clicking data of the selected contacts and dragging the same to the box on the right. When the "Subject Filter" is selected, a "Subject Filtering Rule Setup" screen will pop up to allow the user to enter a keyword or keywords of the mail to be received in the blanks. The aforesaid setup process is performed in the processing unit 24, and the setup data are recorded in the processing unit 24. When the above setup procedures have been completed, the personal computer 33 will perform a setup procedure with respect to the hand-held mobile communications device 22 of the user. After completion of the setup, the hand-held mobile communications device 22 will receive the push mail service.

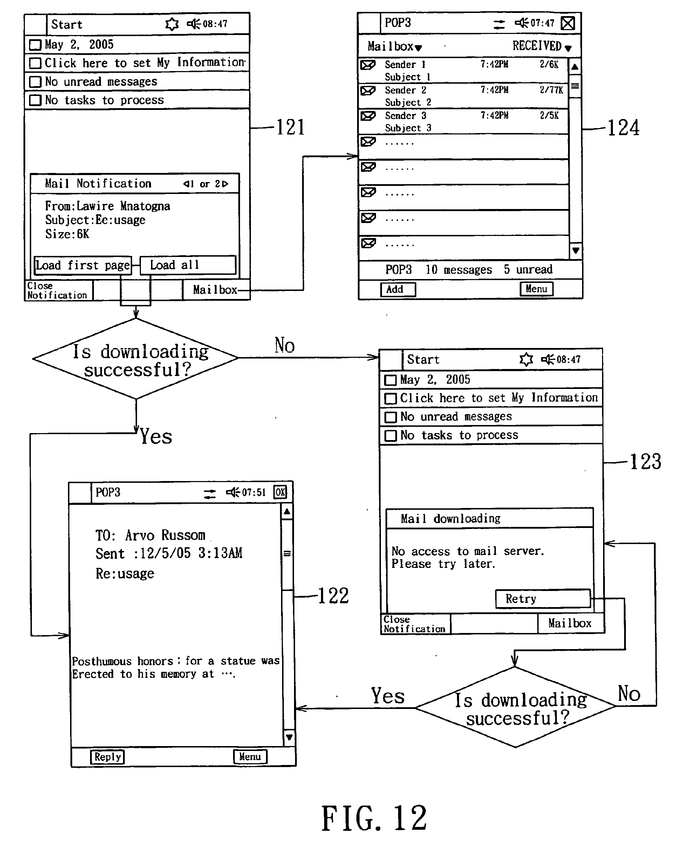

Therefore, as shown in the screen in step 121 of Figure 12, when the hand-held mobile communications device 22 receives a mail notification message, a customized message window (for the user to edit and set the content and manner of display for the message window according to individual requirements) will open on the screen to show the sender of the mail, the subject of the mail, and the size of the mail. At the same time, two options "Download the first page" and "Download all" will appear at a lower portion of the message window for the user's selection and downloading of the content of the mail. If the downloading is successful, a screen as shown in step 122 will be generated to show the content of the mail. Otherwise, in step 123, the user will be requested to try again. Furthermore, in step 121, there are two more options at the lowermost portion of the screen, namely, "Close notification" and "Mailbox." Upon clicking of the "Close notification" option, the message window will be closed. Upon clicking of the "Mailbox" option, a mailbox screen as shown in step 124 will appear to allow the user to check the received mail.

In addition, when the hand-held mobile communications device 22 receives the mail notification message, an incoming notification can be generated to notify the user to check the hand-held mobile communications device 22. The incoming notification may be a ringing tone or vibration. Moreover, the user can customize or edit the form of the incoming notification.

Furthermore, aside from being configured to send a notification in advance, the hand-held mobile communications device 22 may also be set such that when the hand-held mobile communications device 22 receives a notification message, it will automatically download the text (content) of the e-mail associated with the notification message from the information server 31, and then open the customized message window as shown in step 121 to display the sender, the subject, and the size of the mail on a home page screen.

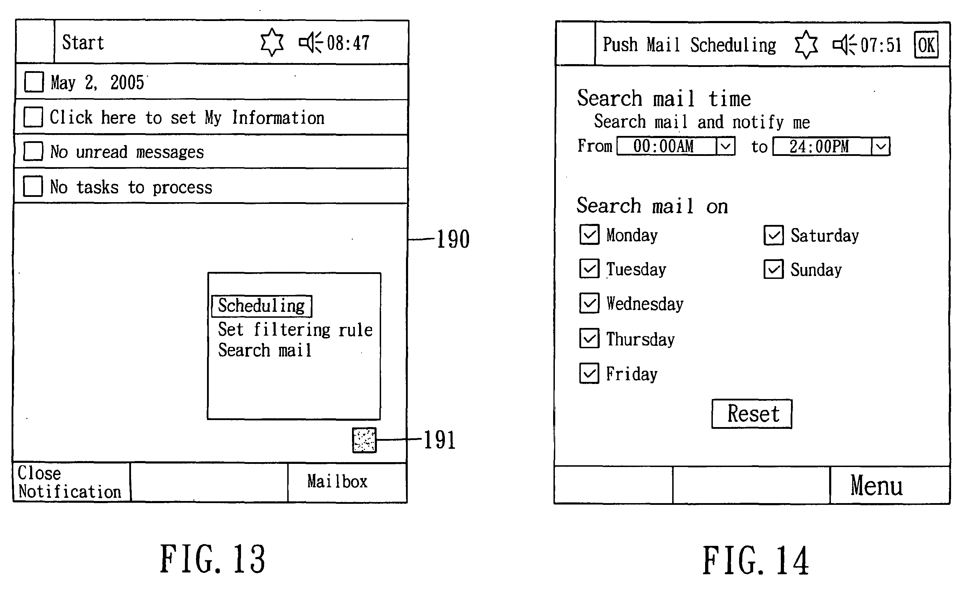

As shown in Figure 13, upon selection of a virtual button 191 at a lower right corner of a home page screen 190 of the hand-held mobile communications device 22, a menu including several options such as "Scheduling" and "Set Filtering Rules" is displayed. When the "Scheduling" option is clicked, a "Mobile Mail Scheduling" management screen as shown in Figure 14 will appear on the display screen, and the user can set the mail checking time of the real time clock 25 of the mobile information service device 21 on the screen to enable the real time clock 25 to trigger the processing unit 24 of the mobile information service device 21 to search for mail data in the information server 31 at preset times according to the time setting.

In addition, to ensure the accuracy of the date and time for the processing unit 24 to perform information searches, the mobile information service device 21 can also be automatically connected to a clock server on the Internet at predetermined times so as to permit automatic calibration of the time of the real time clock 25.

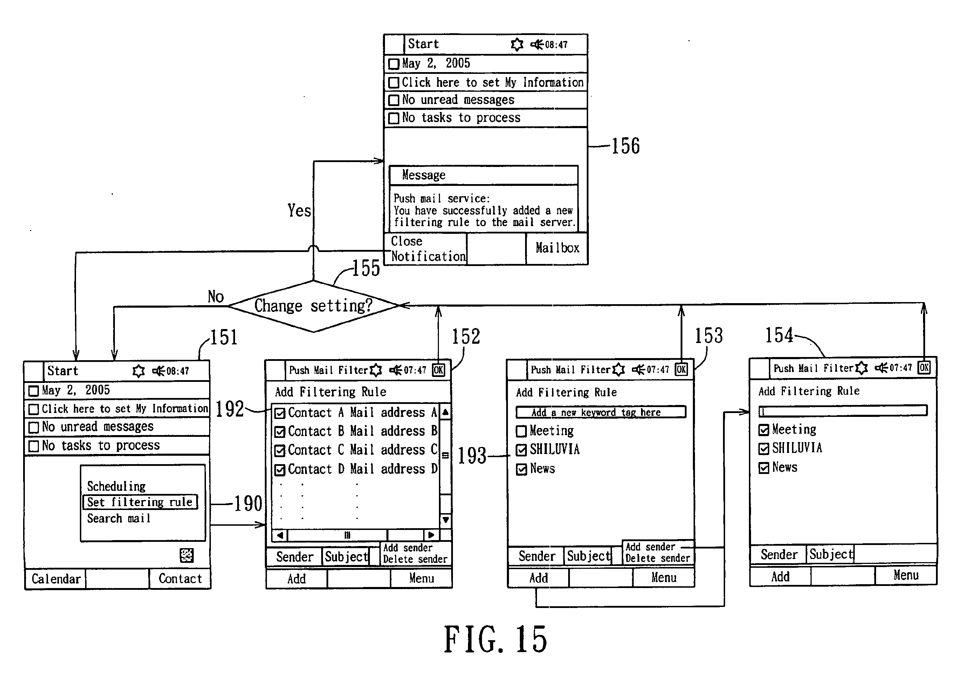

Furthermore, referring to Figure 15, when the user selects the "Set Filtering Rules" option on the home page screen 190 in step 151, options including "Sender" and "Subject" will appear at a lower portion of the screen. When the "Sender" option is selected, a window 192 showing the data of all the contacts will appear for the user to select a sender of interest or to add/delete a sender. When the "Subject" option is selected, in step 153, a window 193 showing a plurality of subjects will appear to allow the user to select the content or subject of the mail desired to be received. Besides, the user can also add/delete a keyword or keywords in the content or subject, as shown in step 154. After completion of the settings in steps 152, 153, and 154 and after an "OK" option is clicked in step 155, the hand-held mobile communications device 22 will, upon determining that the set rules have been changed, display a screen showing completion of the setting of the filtering rules in step 156.

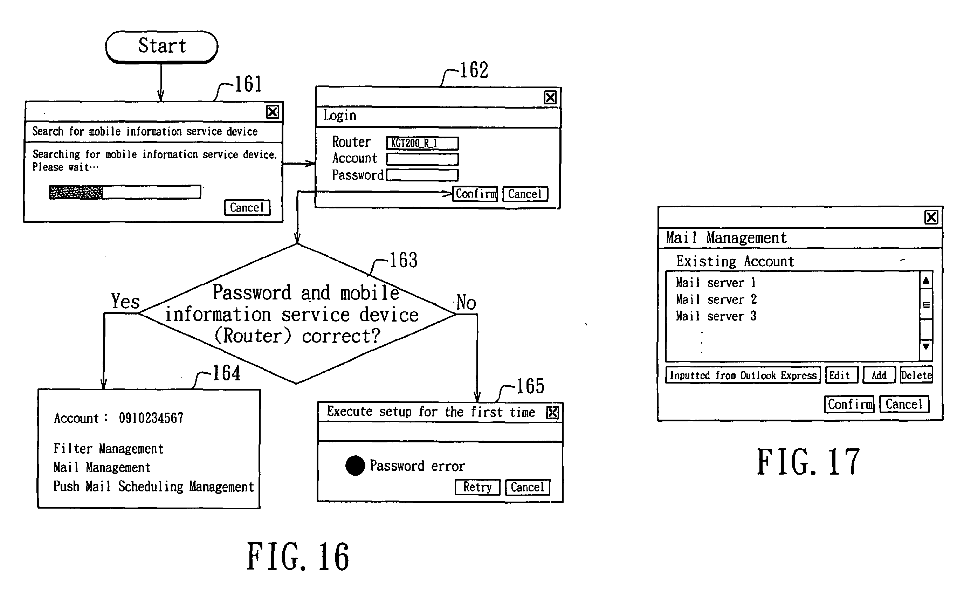

After the mobile information service device 21 has undergone the initialization procedure for first use, when the user wants to set the filtering rules for the mobile information service device 21 through the personal computer 33, in step 161 as shown in Figure 16, the personal computer 33 displays a screen related to a search for the mobile information service device 21 (such as through local area network broadcasting). After locating the mobile information service device 21, in step 162, a login screen showing the located mobile information service device 21 is displayed to allow the user to enter his/her own account number (i.e., mobile phone number) and password so as to log in to the mobile information service device 21. Then, in step 163, when the personal computer 33 determines the mobile information service device 21 and the entered password to be correct, the flow goes to step 164 to open a main page, which includes three options: "Filter Management," "Mail Management," and "Push Mail Scheduling Management." On the contrary, if it is determined in step 163 that the password or the mobile information service device is incorrect, a screen requesting retrying or canceling of the operation is generated in step 165.

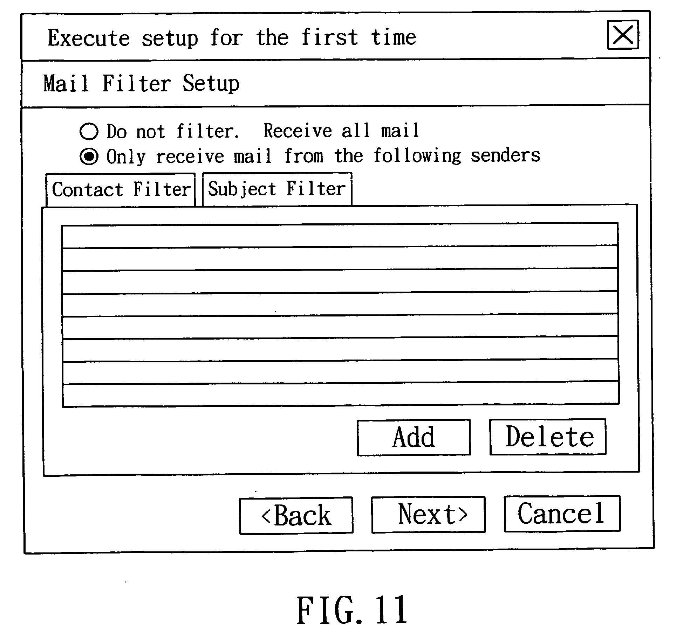

Subsequently, when the user selects "Filter Management," the screens as shown in Figures 10 and 11 will appear once again to allow the user to set the filtering rules, the intended contacts (i.e., senders), or keywords of the mail desired to be received. Then, upon clicking of a "Next" button, a screen entitled "Mail Management" will appear to allow the user to set the mail server (e.g., Exchange Mail Server, POP3/SMTP Mail Server) for searching the mail. The aforesaid setting process is performed in the processing unit 24, and the setting data are recorded in the processing unit 24.

Thereafter, when the user clicks the "OK" button, a screen entitled "Push Mail Scheduling Management" as shown in Figure 12 will appear on the personal computer 33 to allow the user to set the mail checking time of the real time clock 25, which triggers the processing unit 24 to perform a mail data search in the information server 31 accordingly.

In addition, the mobile information service device 21 of the preferred embodiment not only can screen e-mail and send short messages to notify the hand-held mobile communications device 22 of the user to access the e-mail in the mail server, it can also screen web page information provided by an RSS (Really Simple Syndication) transmission system of the information server 31. The information server 31 referred to herein is a web server.

The RSS transmission system is a system for transmitting contents based on XML format, which enables the user to read all the subscribed articles, e.g., information provided by various blogs, or news information provided by various websites (e.g., Yahoo® news) in real time directly through RSS reading software.

Therefore, to permit screening of the web page information provided by the RSS transmission system, and reading (through hyperlinks) of the web page information, the mobile information service device 21 and the hand-held mobile communications device 22 must have an RSS reader installed therein. Thereafter, the user needs to set some web page information sources, e.g., blog websites, on both of the mobile information service device 21 and the hand-held mobile communications device 22. As this belongs to the prior art and is not the crux of this invention, it will not be described in detail herein.

Thus, when the RSS reader of the mobile information service device 21 searches for the web page information set by the user, as described heretofore, the mobile information service device 21 will screen the web page information of interest to the user according to the filtering rules (e.g., author, subject or text) set in the filter of the processing unit 24 by the user, and send a message (short message) to notify the user of the hand-held mobile communications device 22 and simultaneously activate the RSS reader of the hand-held mobile communications device 22 such that, according to the content of the message (short message), the RSS reader only displays the web page information of interest to the user so as to allow the user to browse the corresponding article provided by the web page via a hyperlink.

As illustrated, in the preferred embodiment, by providing the mobile information service device 21 at the user end, and by enabling the user to set filtering rules in the mobile information service device 21 such that the mobile information service device 21 searches the information server 31 for information complying with the filtering rules set by the user, and sends a notification message to the hand-held mobile communication device 22 through the telecommunications service provider so that the hand-held mobile communications device 22 can, after receiving the notification message, download the information desired by the user, the hand-held mobile communications device 22 not only will not receive unwanted information, it can also save information downloading expenses. In addition, since the mobile information service device 21 merely acquires a header of the information or partial contents for screening and does not download the entire piece of information when screening the information, i.e., the actual content of the information will not go through the mobile information service device 21, integrity and confidentiality of the information can be ensured, thereby achieving the intended effect and object of the present invention.

## Claims

1. A method of mobile information service, comprising the steps of:
providing a mobile information service device (21) at a user end for connecting to a remote information server (31) and a telecommunications service provider (32) so as to timely provide information to a hand-held mobile communications device (22);
enabling the mobile information service device (21) to search the information server (31) according to a filtering rule for information complying with the filtering rule, and to send a notification message to the hand-held mobile communications device (22) through the telecommunications service provider (32); and
enabling the hand-held mobile communications device (22) to download information related to the notification message from the information server (31) after receiving the notification message.

2. The method according to Claim 1, **characterized in that** the information server (31) is an e-mail server, and the information is one of a sender, subject and text of an electronic mail stored temporarily in the e-mail server.

3. The method according to Claim 2, further **characterized in that** the filtering rule permits setting of at least one keyword directed to at least one of sender, subject and text of the electronic mail.

4. The method according to Claim 1, **characterized in that** the notification message is sent in a short message format selected from one of MMS, SMS, EMS and WAP Push.

5. The method according to Claim 1, **characterized in that** the information server (31) is a web page server loaded with an RSS transmission system, the information is web page information stored temporarily in the web page server, and, the web page information in the web page server is read by the mobile information service device (21) from the web page server through the RSS transmission system, the web page information being filtered according to the filtering rule so as to timely send the notification message to the hand-held mobile communications device (22).

6. The method according to Claim 5, further **characterized in that** the filtering rule permits setting of keywords related to one of author, subject and text of the web page information for searching web pages or web page text associated with the keywords related to said one of the author, subject and text.

7. A mobile information service device (21) to be provided at a user end and adapted to connect to a remote information server (31) and a telecommunications service provider (32) so as to timely provide information to a hand-held mobile communications device (22), said mobile information service device (21) being **characterized by**:
a communications unit (23) adapted for connecting to the information server (31) and the telecommunications service provider (32); and
a processing unit (24) which is adapted to search, according to a filtering rule and through said communications unit (23), the information server (31) for information complying with the filtering rule and to generate a notification message to be sent to the hand-held mobile communications device (22) through said communications unit (23) connected to the telecommunications service provider (32).

8. The mobile information service device (21) according to Claim 7, **characterized in that** said communications unit (23) includes an Ethernet module (27) and a GSM module (28), said Ethernet module (27) being adapted to connect to the information server (31), said GSM module (28) being adapted to communicate with the telecommunications service provider (32) so as to send the notification message to the hand-held mobile communications device (22).

9. The mobile information service device (21) according to Claim 7, **characterized in that** said communications unit (23) includes an Ethernet module (27), which is adapted to connect to the information server (31) so as to obtain the information, and which is adapted to connect to the telecommunications service provider (32) through the Internet so as to forward the notification message to the hand-held mobile communications device (22) through the telecommunications service provider (32).

10. The mobile information service device (21) according to Claim 7, further **characterized by** a memory unit (26) for temporary storage of the information filtered by said processing unit (24).

11. The mobile information service device (21) according to Claim 7, further **characterized by** a real time clock (25) for setting intervals and dates for conducting searches so as to activate said processing unit (24) to search the information in the information server (31) at predetermined times according to the setting.

12. The mobile information service device (21) according to Claim 11, further **characterized by** means for calibrating automatically the time of said real time clock (25) through the Internet so as to ensure accuracy of the times and dates for said processing unit (24) to search the information.

13. A mobile information service system adapted to be connected to an information server (31) and a telecommunications service provider (32) so as to timely obtain information provided by the information server (31), said mobile information service system being **characterized by**:
a hand-held mobile communications device (22) adapted to be connected to the information server (31) and the telecommunications service provider (32); and
a mobile information service device (21) provided at a user end, said mobile information service device (21) being adapted to be connected to the information server (31) and the telecommunications service provider (32) and which is, after searching the information server (31) for information complying with a filtering rule, adapted to send a notification message through the telecommunications service provider (32) to said hand-held mobile communications device (22) such that said hand-held mobile communications device (22) can, according to the notification message, download the information related to the notification message from the information server (31).

14. The mobile information service system according to Claim 13, **characterized in that** the information server (31) is an electronic mail server, and the information is electronic mail stored temporarily in the electronic mail server.

15. The mobile information service system according to Claim 14, further **characterized in that** the filtering rule permits setting of at least one keyword directed to at least one of sender and subject of the electronic mail for searching and filtering of the electronic mail.

16. The mobile information service system according to Claim 13, **characterized in that** the notification message is sent in a short message format selected from one of MMS, SMS and EMS.

17. The mobile information service system according to Claim 13, **characterized in that** said hand-held mobile communications device (22) is a smart phone having at least one of GPRS and WI-FI functionality built therein.

18. The mobile information service system according to Claim 13, **characterized in that** the information server (31) is a web page server loaded with an RSS transmission system, and the information is web page information stored temporarily in the web page server, said mobile information service device (21) having RSS reader software installed therein to permit reading of the web page information sent from the information server (31) through the RSS transmission system, and being capable of filtering the web page information according to the filtering rule so as to timely send the notification message to said hand-held mobile communications device (22).

19. The mobile information service system according to Claim 18, further **characterized in that** the filtering rule permits setting of at least one keyword related to one of author, subject and text of the web page information for searching web pages or web page text associated with said at least one keyword related to said one of the author, subject and text.

20. The mobile information service system according to Claim 18, **characterized in that** said hand-held mobile communications device (22) has the RSS reader software installed therein to permit reading of the web page information to be sent from the information server (31) through the RSS transmission system such that the RSS reader software will be activated to permit reading of the web page information related to the notification message from the information server (31) when said hand-held mobile communications device (22) receives the notification message and a user of said hand-held mobile communications device (22) decides to read the web page information related to content of the notification message.

21. The mobile information service system according to Claim 14, further **characterized in that**, when said hand-held mobile communications device (22) receives the notification message, a customized message window is shown on a home page screen of said hand-held mobile communications device (22) to display at least one of a sender, a subject and size of the mail, and a "Download first page" option and a "Download all" option available for selection by the user so as to download content of the mail.

22. The mobile information service system according to Claim 14, further **characterized in that** when said hand-held mobile communications device (22) receives the notification message, said hand-held mobile communications device (22) is adapted to automatically download text of electronic mail related to the notification message from the information server (31), and is further adapted to show a customized message window on a home page screen thereof to display at least one of sender, subject, and size of the electronic mail.

## Patentansprüche

1. Ein Verfahren für mobile Informationsdienste, umfassend die Schritte:
das Bereitstellen einer Vorrichtung für mobile Informationsdienste (21) an einer Nutzerseite zur Verbindung mit einem entfernt liegenden Informationsserver (31) und einem Telekommunikationsdienst-Anbieter (32), um ein tragbares mobiles Kommunikationsgerät (22) zeitgerecht mit Informationen zu versorgen;
die Freigabe der Vorrichtung für mobile Informationsdienste (21) zum Suchen des Informationsservers (31) gemäß einer Filter-Regel für Informationen, die der Filter-Regel genügen, und zum Senden einer Benachrichtigung an das tragbare mobile Kommunikationsgerät (22) über den Telekommunikationsdienst-Anbieter (32); und
die Freigabe des tragbaren mobilen Kommunikationsgeräts (22), um nach Erhalt der Benachrichtigung Information herunterzuladen, die in Relation zu der Benachrichtigung des Informationsservers (31) steht.

2. Verfahren nach Anspruch 1, **dadurch gekennzeichnet, dass** der Informationsserver (31) ein E-Mail-Server ist und die Information ein Element der Gruppe: Sender, Betreff, Text einer elektronischen Mail ist, die temporär in dem E-Mail-Server gespeichert ist.

3. Verfahren nach Anspruch 2, weiterhin **dadurch gekennzeichnet, dass** die Filter-Regel das Festlegen von mindestens einem Schlüsselwort erlaubt, das sich zumindest auf ein Element der Gruppe Sender, Betreff und Text der E-Mail bezieht.

4. Verfahren nach Anspruch 1, **dadurch gekennzeichnet, dass** die Benachrichtigung in einem kurzen Mitteilungsformat, ausgewählt aus MMS, SMS, EMS und WAP Push, gesendet wird.

5. Verfahren nach Anspruch 1, **dadurch gekennzeichnet, dass** der Informationsserver (31) ein Webseitenserver ist, der mit einem RSS-Übertragungssystem geladen ist, die Information Webseiten-Information ist, die temporär in dem Webseitenserver gespeichert ist, und die Webseiten-Information in dem Webseitenserver durch die Vorrichtung für mobile Informationsdienste (21) von dem Webseitenserver durch das RSS-Übertragungssystem ausgelesen wird, wobei die Webseiten-Information gemäß der Filter-Regel filtriert wird, so dass die Benachrichtigung rechtzeitig an das tragbare mobile Kummunikationsgerät (22) geschickt wird.

6. Verfahren nach Anspruch 5, weiterhin **dadurch gekennzeichnet, dass** die Filter-Regel das Festlegen von Schlüsselwörtern erlaubt, die sich zumindest auf ein Element der Gruppe Autor, Betreff, Text der Webseiten-Information beziehen, um Webseiten oder Webseiten-Text zu suchen, der den Schlüsselwörtern zugeordnet ist, die sich auf den Autor, das Betreff und den Text beziehen.

7. Vorrichtung für mobile Informationsdienste (21), die an einer Nutzerseite vorgesehen ist und dazu angepasst ist, eine Verbindung mit einem entfernt liegenden Informationsserver (31) und zu einem Telekommunikationsdienst-Anbieter (32) herzustellen, um ein tragbares mobiles Kommunikationsgerät (22) zeitgerecht mit Informationen zu versorgen, wobei die Vorrichtung für mobile Informationsdienste (21) **gekennzeichnet ist durch**:
eine Kommunikationseinheit (23), die dazu angepasst ist, mit dem Informationsserver (31) und dem Telekommunikationsdienst-Anbieter (32) eine Verbindung herzustellen; und
eine Verarbeitungseinheit (24), die dazu angepasst ist, gemäß einer Filter-Regel und **durch** die Kommunikationseinheit (23), den Informationsserver (31) nach Information durchzusuchen, die der Filter-Regel genügt und eine Benachrichtigung zu erzeugen, die an das tragbare mobile Kommunikationsgerät (22) **durch** die Kommunikationseinheit (23) gesendet wird, die mit dem Telekommunikationsdienst-Anbieter (32) in Verbindung steht.

8. Vorrichtung für mobile Informationsdienste (21) nach Anspruch 7, **dadurch gekennzeichnet, dass** die Kommunikationseinheit (23) ein Ethernet-Modul (27) und ein GSM-Modul (28) beinhaltet, wobei das Ethernet-Modul dazu angepasst ist, eine Verbindung mit dem Informationsserver (31) herzustellen, wobei das GSM-Modul (28) dazu angepasst ist, mit dem Telekommunikationsdienst-Anbieter (32) zu kommunizieren, um die Benachrichtigung an das tragbare mobile Kommunikationsgerät (22) zu senden.

9. Vorrichtung für mobile Informationsdienste (21) nach Anspruch 7, **dadurch gekennzeichnet, dass** die Kommunikationseinheit (23) ein Ethernet-Modul (27) beinhaltet, das dazu angepasst ist, mit dem Informationsserver (31) eine Verbindung herzustellen, um so Information zu erhalten, und das dazu angepasst ist, mit dem Telekommunikationsdienst-Anbieter (32) über das Internet eine Verbindung herzustellen, um die Benachrichtigung an das tragbare mobile Kommunikationsgerät (22) durch den Telekommunikationsdienst-Anbieter (32) zu übermitteln.

10. Vorrichtung für mobile Informationsdienste (21) nach Anspruch 7, weiterhin **gekennzeichnet durch** eine Speichereinheit (26) zum temporären Speichern der **durch** die Verarbeitungseinheit (24) gefilterten Information.

11. Vorrichtung für mobile Informationsdienste (21) nach Anspruch 7, weiterhin **gekennzeichnet durch** eine Echtzeit-Uhr (25) zum Festsetzen von Intervallen und Zeitpunkten, um Nachforschungen durchzuführen, damit die Verarbeitungseinheit (24) aktiviert wird, um die Information im Informationsserver (31) an vorgegebenen Zeitpunkten gemäß den festgesetzten Zeiten zu suchen.

12. Vorrichtung für mobile Informationsdienste (21) nach Anspruch 11, weiterhin **gekennzeichnet durch** Mittel zum automatischen Kalibrieren der Zeit der Echtzeit-Uhr (25) **durch** das Internet, um somit die Genauigkeit der Zeiten und Zeitpunkte für die Verarbeitungseinheit (24) zum Ermitteln der Information sicherzustellen.

13. System für mobile Informationsdienste, das dazu angepasst ist, mit einem Informationsserver (31) und einem Telekommunikationsdienst-Anbieter (32) verbunden zu sein, um rechtzeitig von dem Informationsserver (31) zur Verfügung gestellte Information zu erhalten, wobei das System für mobile Informationsdienste **gekennzeichnet ist durch**:
ein tragbares mobiles Kommunikationsgerät (22), das dazu angepasst ist, mit dem Informationsserver (31) und dem Telekommunikationsdienst-Anbieter (32) verbunden zu werden; und
eine Vorrichtung für mobile Informationsdienste (21), die auf einer Nutzerseite vorgesehen ist, wobei die Vorrichtung für mobile Informationsdienste (21), dazu angepasst ist, mit dem Informationsserver (31) und dem Telekommunikationsdienst-Anbieter (32) verbunden zu werden, und die nach dem Suchen des Informationsservers (31) für die Information, die der Filter-Regel genügt, dazu angepasst ist, eine Benachrichtigung über den Telekommunikationsdienst-Anbieter (32) an das tragbare mobile Kommunikationsgerät (22) zu schicken, so dass das tragbare mobile Kommunikationsgerät (22) gemäß der Benachrichtigung, die Information, auf die sich die Benachrichtigung vom Informationsserver (31) bezieht, runterladen kann.

14. System für mobile Informationsdienste nach Anspruch 13, **dadurch gekennzeichnet, dass** der Informationsserver (31) ein elektronischer Mail-Server ist und die Information eine elektronische Mail ist, die temporär im elektronischen Mail-Server gespeichert ist.

15. System für mobile Informationsdienste nach Anspruch 14, weiterhin **dadurch gekennzeichnet, dass** die Filter-Regel das Festlegen von wenigstens einem Schlüsselwort zulässt, das auf wenigstens ein Element der Gruppe Sender und Betreff der elektronischen Mail zur Suche und zum Filtern der elektronischen Mail gerichtet ist.

16. System für mobile Informationsdienste nach Anspruch 13, **dadurch gekennzeichnet, dass** die Benachrichtigung als kurzes Mitteilungsformat geschickt wird, ausgewählt aus der Gruppe bestehend aus MMS, SMS und EMS.

17. System für mobile Informationsdienste nach Anspruch 13, **dadurch gekennzeichnet, dass** das tragbare mobile Kommunikationsgerät (22) ein Smartphone ist, in das wenigstens ein Element der Gruppe GPRS-, WI-FI-Funktion eingebaut ist.

18. System für mobile Informationsdienste nach Anspruch 13, **dadurch gekennzeichnet, dass** der Informationsserver (31) ein Webseiten-Server ist, der mit einem RSS-Übertragungssystem geladen ist, und die Information Webseiteninformation ist, die temporär in dem Webseiten-Server gespeichert ist, wobei das System für mobile Informationsdienste (21) RSS-Lese-Software aufweist, die darin installiert ist, um das Lesen der Webseiten-Information zu erlauben, die von dem Informationsserver (31) durch das RSS-Übertragungssystem gesendet wurde, und die in der Lage ist, die Webseiten-Information gemäß der Filter-Regel zu filtrieren, um so die Benachrichtigung rechtzeitig an das tragbare mobile Kommunikationsgerät (22) zu schicken.

19. System für mobile Informationsdienste nach Anspruch 18, weiterhin **dadurch gekennzeichnet, dass** die Filter-Regel das Festlegen von mindestens einem Schlüsselwort erlaubt, das sich auf einen Autor, ein Betreff und einen Text der Webseiten-Information zum Recherchieren von Webseiten oder Webseiten-Text bezieht, der dem wenigstens einen Schlüsselwort zugeordnet ist, das sich auf ein Element der Gruppe Autor, Betreff und Text bezieht.

20. System für mobile Informationsdienste nach Anspruch 18, **dadurch gekennzeichnet, dass** bei dem tragbaren mobilen Kommunikationsgerät (22) die RSS-Software darin installiert ist, um das Lesen der Webseiten-Information zu erlauben, die von dem Informationsserver (31) durch das RSS-Übertragungssystem gesendet wird, so dass die RSS-Leser-Software aktiviert wird, um das Lesen der Webseiten-Information zu erlauben, auf die sich die Benachrichtigung vom Informationsserver (31) bezieht, wenn das tragbare mobile Kommunikationsgerät (22) die Benachrichtigung erhält und sich ein Nutzer des tragbaren mobilen Kommunikationsgeräts (22) dazu entschließt, die Webseiten-Information zu lesen, die sich auf den Inhalt der Benachrichtigung bezieht.

21. System für mobile Informationsdienste nach Anspruch 14, weiterhin **dadurch gekennzeichnet, dass**, wenn das tragbare mobile Kommunikationsgerät (22) die Benachrichtigung erhält, ein individualisiertes Meldungsfenster auf einem Homepage-Bildschirm des tragbaren mobilen Kommunikationsgeräts (22) gezeigt wird, um wenigstens ein Element der Gruppe: Sender, Betreff, und Umfang der Mail, sowie eine Option zum "Herunterladen der ersten Seite" sowie eine Option zum "kompletten Herunterladen", die zum Auswählen durch den Nutzer verfügbar ist, darzustellen, um so den Inhalt der Mail herunterzuladen.

22. System für mobile Informationsdienste nach Anspruch 14, weiterhin **dadurch gekennzeichnet, dass** wenn das tragbare mobile Kommunikationsgerät (22) die Benachrichtigung erhält, ist das tragbare mobile Kommunikationsgerät (22) dazu angepasst, automatisch den Text der elektronischen Mail herunterzuladen, der sich auf die Benachrichtigung von dem Informationsserver (31) bezieht, und ist weiterhin dazu angepasst, ein individualisiertes Meldungsfenster auf einem Homepage-Bildschirm zu zeigen, um wenigstens ein Element der Gruppe Sender, Betreff und Umfang der elektronischen Mail zu zeigen.

## Revendications

1. Procédé pour des services d'information mobile comprenant les étapes :
mettre à disposition un dispositif de service d'information mobile (21) sur un coté usager pour la liaison avec un serveur d'informations éloigné (31) et avec un prestataire de service de télécommunications (32) pour fournir à temps des informations à un dispositif de communication (22) portable et mobile ;
permettre au dispositif de service d'information mobile (21) de chercher le serveur d'informations (31) conformément à une loi de filtre pour de l'information qui satisfait à la loi de filtre, et d'envoyer un message de notification au dispositif portable mobile de communication (22) par le prestataire de service dans le domaine de télécommunications (32) ; et
permettre au dispositif portable mobile de communications (22) de télécharger de l'information relative au message de notification du serveur d'informations (31) après avoir reçu le message de notification.

2. Procédé selon la revendication 1, **caractérisé en ce que** le serveur d'information (31) est un serveur e-mail et l'information est un élément parmi le groupe : émetteur, de référence et un texte d'un mail électronique mémorisé temporairement dans le serveur e-mail.

3. Procédé selon la revendication 2, **caractérisé en outre en ce que** la loi de filtre permet de définir au moins un mot-clé qui se réfère à au moins un élément parmi le groupe : émetteur, référence et au texte du mail électronique.

4. Procédé selon la revendication 1, **caractérisé en ce que** le message de notification est envoyé en un format de message court choisi parmi le MMS, le SMS, le EMS et le WAP Push.

5. Procédé selon la revendication 1, **caractérisé en ce que** le serveur d'informations (31) est un serveur de page Web, chargé d'un système de transmission RSS, **en ce que** l'information est une information de page Web, mémorisée temporairement dans le serveur de page Web, et **en ce que** l'information de page Web dans le serveur de page Web est lue par le dispositif de service d'information mobile (21) du serveur de page Web par le système de transmission RSS, l'information de page Web étant filtrée selon la loi de filtre, pour envoyer ainsi à temps le message de notification au dispositif portable mobile de communication (22).

6. Procédé selon la revendication 5, **caractérisé en outre en ce que** la loi de filtre permet de fixer des mots-clés qui se réfèrent au moins à un élément du groupe auteur, référence et texte de l'information de la page Web pour la recherche de pages Web ou le texte de pages Web, le texte étant associé à des mots-clés qui se réfèrent à l'auteur, à la référence et au texte.

7. Dispositif de service d'information mobile (21) mis à disposition à un coté usager et qui est adapté à établir une liaison avec un serveur d'informations (31) éloigné et avec un prestataire de service de télécommunications (32) pour fournir à temps des informations à un dispositif portable mobile de communication (22), le dispositif de service d'information mobile (21) étant **caractérisé par** :
une unité de communication (23), adaptée à établir une connexion avec le serveur d'informations (31) et le prestataire de service de télécommunications (32) ; et
une unité de traitement (24) qui est adaptée à rechercher selon une loi de filtre et par l'unité de communication (23), le serveur d'information (31) pour de l'information qui répond aux exigences de la loi de filtre et pour générer un message de notification envoyé au dispositif portable mobile de communication (22) par l'unité de communications (23) qui est connectée au prestataire de service de télécommunications (32).

8. Dispositif de service d'information mobile (21), selon la revendication 7 **caractérisé en ce que** l'unité de communications (23) comporte un module Ethernet (27) et un module GSM, le module Ethernet (27) étant adapté à établir une liaison avec le serveur d'information (31), le module GSM étant adapté à communiquer avec le prestataire de service des télécommunications (32) pour envoyer le message de notification au dispositif portable mobile de communication (22).

9. Dispositif de service d'information mobile (21), selon la revendication 7, **caractérisé en ce que** l'unité de communications (23) comporte un module Ethernet (27) qui est adapté à établir une liaison avec le serveur d'informations (31) pour obtenir l'information et qui est adapté à établir une liaison avec le prestataire de service de télécommunications (32) par l'Internet, pour transmettre le message de notification au dispositif portable mobile de communication (22) par le prestataire de service dans le domaine des télécommunications (32).

10. Dispositif de service d'information mobile (21) selon la revendication 7, **caractérisé en outre par** l'unité de mémoire (26) pour la mémorisation temporaire de l'information filtrée par cette unité de traitement (24).

11. Dispositif de service d'information mobile (21) selon la revendication 7, **caractérisé en outre par** une horloge temps réel (25) pour fixer des intervalles et des dates pour effectuer des recherches en vue d'activer l'unité de traitement (24) de rechercher l'information dans le serveur d'information (31) à des heures prédéterminées selon le fixage.

12. Dispositif de service d'information mobile (21) selon la revendication 11, **caractérisé en outre par** des moyens pour calibrer automatiquement l'heure de l'horloge temps réel (25) par l'Internet pour assurer l'exactitude des heures et des dates pour l'unité de traitement (24) pour la recherche d'information.

13. Système de service d'information mobile pour être connecté à un serveur d'information (31) et un prestataire de service de télécommunications (32) pour obtenir à l'heure des informations qui sont mises à disposition par le serveur d'information (31), le système de service d'information mobile étant **caractérisé par** :
un dispositif portable mobile de communication (22), adapté à être connecté au serveur d'information (31) et au prestataire de service de télécommunications (32) ; et
un dispositif de service d'information mobile (21) prévu sur un coté usager, le dispositif de service d'information mobile (21) étant adapté à être connecté au serveur d'information (31) et au prestataire de service des télécommunications (32) et
un dispositif de service d'information mobile (21) prévu sur un coté usager, le dispositif de service d'information mobile (21) étant adapté à être lié au serveur d'information (31) et au prestataire de service de télécommunications (32) et qui est, après avoir recherché le serveur d'informations (31) pour des informations qui suffisent à une loi de filtre, adapté pour envoyer un message de notification par le prestataire de service de télécommunications (32) au dispositif portable mobile de communications (22), de sorte que le dispositif portable mobile de communications (22) puisse selon le message de notification télécharger l'information associée au message de notification du serveur d'information (31).

14. Système de service d'information mobile selon la revendication 13, **caractérisé en ce que** le serveur d'informations (31) est un serveur de mail électronique, et l'information est un mail électronique mémorisé temporairement dans le serveur de mail électronique.

15. Système de service d'information mobile selon la revendication 14, **caractérisé en outre en ce que** la loi de filtre permet de définir au moins un mot-clé relatif à au moins un élément du groupe émetteur et de référence du mail électronique pour rechercher et pour filtrer le mail électronique.

16. Système de service d'information mobile selon la revendication 13, **caractérisé en ce que** le message de notification est envoyé en un format à format de message court, choisi parmi le MMS, SMS et EMS.

17. Système de service d'information mobile selon la revendication 13, **caractérisé en ce que** le dispositif portable mobile de communication (22) est un smart phone, dans lequel au moins un élément du groupe GPRS- WI-FI fonctionnalité est intégré.

18. Système de service d'information mobile selon la revendication 13, **caractérisé en ce que** le serveur d'information (31) est un serveur de page Web chargé d'un système de transmission RSS et que l'information est de l'information de page Web mémorisée temporairement dans le serveur de page Web, le dispositif d'information mobile (21) ayant de la software RSS de lecture intégrée, afin de permettre la lecture de l'information de page Web envoyée par le serveur d'information (31) par le système de transmission RSS et d'être capable de filtrer l'information de la page Web conformément à la loi de filtre afin d'envoyer à temps le message de notification au dispositif portable mobile de communication (22).

19. Système de service d'information mobile selon la revendication 18, **caractérisé en outre en ce que** la loi de filtre permet de définir au moins un mot-clé, en relation avec un auteur, un sujet et un texte de l'information de la page Web pour la recherche de pages Web ou de textes de pages Web associées à au moins un mot-clé en relation avec au moins un élément du groupe : auteur, référence et texte.

20. Système de service d'information mobile selon la revendication 18, **caractérisé en ce que** dans le dispositif portable mobile de communication (22) la software de lecture RSS est intégrée, afin de permettre la lecture de l'information de la page Web étant envoyée depuis le serveur d'information (31) par le système de transmission RSS, de sorte que la software de lecture RSS soit activée afin de permettre la lecture de l'information de la page Web qui est en relation au message de notification depuis le serveur d'information (31) quand le dispositif portable mobile de communication (22) reçoit le message de notification et un usager du dispositif portable mobile de communication (22) décide de lire l'information de la page Web en relation avec le contenu du message de notification.

21. Système de service d'information mobile selon la revendication 14, **caractérisé en outre en ce que** lorsque le dispositif portable mobile de communication (22) reçoit le message de notification, une fenêtre de message personnalisé est montrée sur une page d'accueil d'un écran du dispositif portable mobile de communication (22) pour représenter au moins un élément du groupe émetteur, référence et volume du mail ainsi qu'une option de "téléchargement de première page" et une option de "téléchargement complet", qui est à disposition pour être choisie par l'usager pour télécharger le contenu du mail.

22. Système de service d'information mobile selon la revendication 14, **caractérisé en outre par le fait que** lorsque le dispositif portable mobile de communication (22) reçoit le message de notification, le dispositif portable mobile de communication (22) est adapté à télécharger automatiquement le texte du e-mail en relation avec le message de notification du serveur d'information (31) et est adapté en outre à montrer une fenêtre de message personnalisée sur une page d'accueil d'un écran pour représenter au moins un émetteur, un sujet et le volume du mail électronique.
